# FASCICULE DE BREVET EUROPEEN

(11) **EP 0 808 783 B1**
(45) Date de publication et mention de la délivrance du brevet: **04.08.2004**
(21) Numéro de dépôt: 97440020.2
(22) Date de dépôt: 27.02.1997
(51) Int. Cl.: B65G 1/14

(54) **Dispositif à taquets mobiles avec rappel assisté pour l'empilage, dans toutes les positions, d'objets de relativement grandes dimensions et sensiblement plats**
Anlage mit beweglichen Klinken mit Rückstell-Unterstützung zum Lagern in allen Stellungen, insbesondere für im wesentlichen flache Gegenstände mit relativ grossen Abmessungen
Device with mobile levers with assisted return for stacking in all positions, especially for substantially flat and relatively large-sized objects

(30) Priorité: 23.05.1996 FR 9606570
(43) Date de publication de la demande: 26.11.1997
(73) Titulaire: Humery Frères S.A., 37110 Chateau-Renault (FR)
(72) Inventeur: Boisseau, René, 37000 Tours (FR); Simon, Patrick, 37110 Chateau-Renault (FR)
(74) Mandataire: Arbousse-Bastide, Jean-Claude Philippe

(56) Documents cités:
- EP-A- 0 613 837
- DE-B- 1 041 869

## Description

La présente invention a pour objet un dispositif de rampe à taquets mobiles pour l'empilage, en vue de stockage, d'objets de relativement grandes dimensions et sensiblement plats, comme par exemple les éléments constitutifs d'une carrosserie d'automobile.

On connaît déjà des dispositifs d'empilage essentiellement constitués de plusieurs colonnes dressées sur une plate-forme, chacune d'elles comportant une série de taquets montés pivotants, dont une extrémité est susceptible de déborder d'un plan desdites colonnes. Les objets à empiler sont posés chacun sur l'un des taquets de chacune des colonnes, sous le poids dudit objet les taquets s'abaissent et se bloquent dans une position basse, et ils commandent, par un système de renvoi, la sortie, dans une position intermédiaire, des taquets supérieurs adjacents en vue de la prise en charge d'un autre objet.

L'enlèvement d'un objet empilé entraîne le pivotement en retour des taquets sur lesquels il reposait, et le dégagement de l'objet inférieur, le pivotement desdits taquets étant généralement obtenu par gravité, ceux-ci comportant un contrepoids du côté opposé à celui sur lequel repose l'objet, au-delà de l'axe de pivotement.

L'empilage peut nécessiter d'être réalisé selon différents plans, principalement verticalement ou horizontalement, dans le cas d'un empilage vertical les objets à stocker reposent sur les taquets, et dans le cas d'un empilage horizontal, les objets sont suspendus et leur base est bloquée entre deux taquets.

Or les dispositifs existants ne peuvent être utilisés à la fois pour un empilage vertical et horizontal.

Pour pallier cet inconvénient il a été proposé dans le document EP-A-0 604 337 au nom de la Demanderesse, un dispositif de colonne qui comporte notamment un ressort de rappel au niveau de chacun des taquets, permettant le pivotement en retour de ceux-ci sans faire appel à la gravité, et autorisant ainsi une utilisation dans des plans différents.

Ce dispositif présente toutefois un inconvénient en ce que la tension du ressort ne peut pas être réglée, sauf à remplacer ledit ressort, alors que cela peut être nécessaire, par exemple selon que l'empilage est vertical ou horizontal.

D'autre part ce dispositif nécessite l'emploi d'un ressort de petite longueur, avec pour inconvénient une fatigue rapide de celui-ci.

La présente invention a pour but de remédier à cet inconvénient en proposant un dispositif pour l'empilage à taquets mobiles avec rappel assisté, utilisable dans toutes les positions, où lesdits taquets sont rappelés chacun par un ressort dont la tension peut être aisément réglée.

Le dispositif d'empilage à taquets mobiles selon l'invention se caractérise essentiellement en ce qu'il comporte une rampe entre les deux flasques de laquelle sont montés pivotants, chacun autour d'un axe, des taquets comportant chacun transversalement une cavité cylindrique foncée, traversée axialement par ledit axe et dont le fond est percé d'un trou permettant le passage dudit axe par l'une de ses extrémités qui traverse l'un desdits flasques, ladite cavité logeant un ressort de torsion enfilé sur ledit axe et solidarisé au taquet par l'une de ses extrémités, l'autre extrémité étant solidaire d'une douille apte à être introduite partiellement dans ladite cavité et dans laquelle est pratiqué axialement un trou borgne dans lequel est introduite l'autre extrémité dudit axe, ladite douille étant engagée dans une lumière pratiquée dans l'autre flasque et qui comporte des échancrures dans l'une desquelles est introduite un ergot que comporte en périphérie ladite douille, permettant ainsi le blocage en rotation de cette dernière dans ladite lumière, ledit ergot étant du côté du taquet d'une largeur supérieure à celle des échancrures afin de bloquer ladite douille en translation, intérieurement à ladite rampe.

Selon une caractéristique additionnelle du dispositif selon l'invention, chacune des lumières pratiquées dans le flasque, comporte une échancrure plus large permettant le passage de l'ergot et donc l'enlèvement de la douille.

Selon une autre caractéristique additionnelle du dispositif selon l'invention la douille comporte à son extrémité opposée à celle percée de l'orifice borgne, une empreinte creuse permettant son manoeuvrement en rotation au moyen d'un outil.

Le réglage de la tension du ressort du dispositif selon l'invention est réalisé de la manière suivante, le ressort est comprimé longitudinalement en appuyant axialement sur la douille afin d'extraire l'ergot de l'échancrure dans laquelle il est engagé, puis, après rotation de la douille, ce qui a pour effet de tendre ou détendre le ressort, l'ergot est engagé dans une autre échancrure.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue partielle en coupe selon un plan vertical d'un dispositif de rampe à taquets selon l'invention.
- la figure 2 représente une vue partielle en perspective, en éclaté et avec arraché partiel, du même dispositif.
- la figure 3 représente une vue partielle en coupe d'un élément du même dispositif.
- la figure 4 représente une vue en coupe longitudinale d'un autre élément du même dispositif.

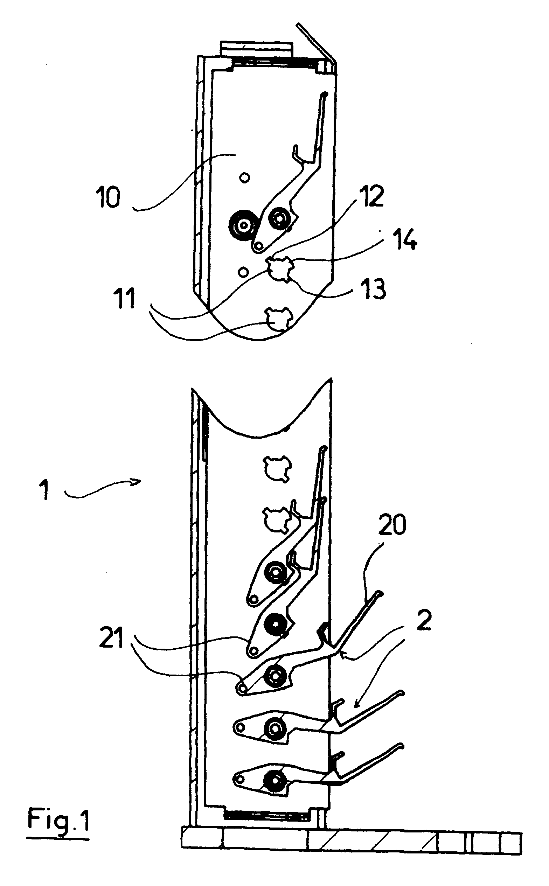

Si on se réfère à la figure 1 on peut voir qu'un dispositif d'empilage à taquets mobiles selon l'invention comporte une rampe 1 entre les flasques 10, dont un seul est visible sur la figure, de laquelle sont montés pivotants des taquets 2.

Chaque taquets 2 comporte une extrémité 20 destinée à recevoir le bord d'un objet à stocker, et une extrémité 21 destinée à être reliée, de manière connue, aux taquets 2 adjacents par l'intermédiaire de bielles, non représentées.

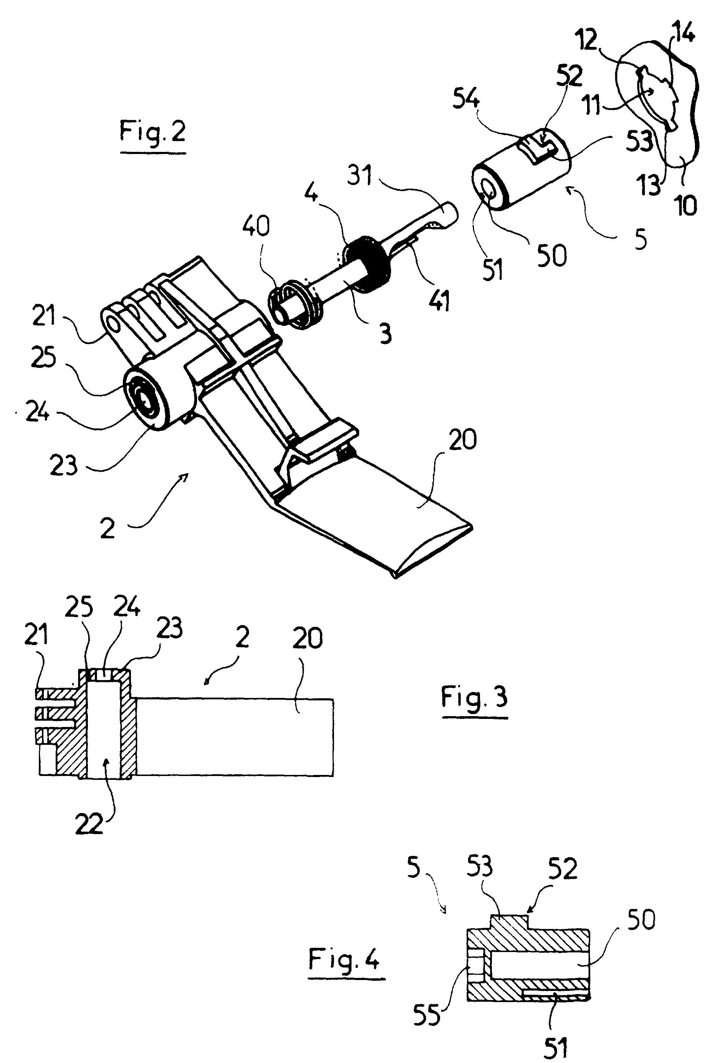

Si on se réfère maintenant à la figure 2 on peut voir qu'un taquet 2 est destiné à être monté pivotant sur un axe 3 introduit dans une cavité cylindrique foncée 22, visible sur la figure 3, dont le fond 23 est percé d'un trou 24 permettant le passage de l'extrémité 30 de l'axe 3, et dans laquelle est logé un ressort 4 enfilé sur l'axe 3 et une partie d'une douille cylindrique 5 comportant axialement un trou borgne 50 dans lequel est introduite, et éventuellement solidarisée, l'extrémité 31 de l'axe 3.

Le ressort 4 est solidarisé au taquet 2 par son extrémité 40 qui est pliée en forme de U et introduite dans une fente 25, visible sur les figure 2 et 3, pratiquée coaxialement au trou 24, où elle est bloquée, tandis que son extrémité 41 est enfilée dans un perçage 51 pratiqué dans la douille 5, parallèlement au trou borgne 50.

La douille 5 comporte, faisant saillie de sa paroi cylindrique, un ergot 52 en forme générale de L, à savoir qu'il comprend une partie longitudinale 53 et une partie transversale 54.

La douille 5 est destinée à être engagée dans l'une des lumières 11, pratiquées dans l'un des flasques 10 coome cela est visible sur la figure 1, qui est de forme générale circulaire avec trois échancrures 12, 13 et 14.

Les deux échancrures 12 et 13, qui sont diamétralement opposées, sont d'une largeur permettant uniquement le passage de la partie longitudinale 53 de l'ergot 52, tandis que l'échancrure 14 est d'une largueur permettant le passage de la partie transversale 54, donc de l'ergot 52 en entier.

L'échancrure 14 permet le montage de la douille dans le flasque 10 en faisant passer l'ergot 52 du côté intérieur de celui-ci, tandis que les échancrures 12 et 13 définissent deux positions angulaires différentes de la douille 5 avec blocage en translation de celle-ci par la partie 54.

La rotation de la douille 5 et son blocage permettent de régler la tension du ressort 4, ce qui est réalisé aisément au moyen d'un outil introduit dans une empreinte creuse 55, visible sur la figure 4, pratiquée dans la douille 5 du côté opposé à celui comportant le trou borgne 50.

Avantageusement, le dispositif selon l'invention permet d'utiliser un ressort 4 de grande longueur qui ainsi ne fatigue pas.

De plus, le ressort 4 est logé complètement dans la cavité 22 du taquet 2, il y est ainsi protégé des agressions extérieures, cette protection pouvant être accrue en réalisant une étanchéité au moyen de graisse.

## Revendications

1. Dispositif à taquets mobiles avec rappel assisté pour l'empilage, dans toutes les positions, d'objets de relativement grandes dimensions et sensiblement plats, **caractérisé en ce qu'**il comporte une rampe (1) entre les deux flasques (10) de laquelle sont montés pivotants, chacun autour d'un axe (3), des taquets (2) comportant chacun transversalement une cavité cylindrique foncée (22), traversée axialement par ledit axe (3) et dont le fond (23) est percé d'un trou (24) permettant le passage dudit axe (3) par l'une de ses extrémités (30) qui traverse l'un desdits flasques (10), ladite cavité (22) logeant un ressort de torsion (4) enfilé sur ledit axe (3) et solidarisé au taquet (2) par l'une de ses extrémités (40), l'autre extrémité (41) étant solidaire d'une douille (5) apte à être introduite partiellement dans ladite cavité (22) et dans laquelle est pratiqué axialement un trou borgne (50) dans lequel est introduite l'autre extrémité (31) dudit axe (3), ladite douille (5) étant engagée dans une lumière (11)pratiquée dans l'autre flasque (10) et qui comporte des échancrures (12, 13) dans l'une desquelles est introduite un ergot (52) que comporte en périphérie ladite douille (5), et permettant ainsi le blocage en rotation de cette dernière dans ladite lumière (11), ledit ergot (52) étant du côté (54) du taquet (2) d'une largeur supérieure à celle desdites échancrures (12, 13) afin de bloquer ladite douille (5) en translation, intérieurement à ladite rampe.

2. Dispositif selon la revendication 1 **caractérisé en ce que** la lumière pratiquée dans le flasque, comporte une échancrure (14) plus large permettant le passage en entier de l'ergot (52) et donc l'enlèvement de la douille (5).

3. Dispositif selon la revendication 1 ou la revendication 2 **caractérisé en ce que** la douille (5) comporte à son extrémité opposée à celle percée d'un orifice borgne, une empreinte creuse permettant son manoeuvrement en rotation au moyen d'un outil.

4. Dispositif selon l'une quelconque des revendications précédentes **caractérisé en ce que** le ressort (4) est solidarisé au taquet (2) par l'intermédiaire de son extrémité (40) qui est pliée en forme de U et introduite et bloquée dans une fente (25) pratiquée dans le fond (23) coaxialement au trou (24) de passage de l'axe (3), tandis qu'il est solidarisé à la douille (5) par son autre extrémité (41) qui est introduite dans un perçage (54) pratiqué parallèlement au trou borgne (53).

## Patentansprüche

1. Vorrichtung mit beweglichen Nasen mit Servo-Rückstellung zum Stapeln, in jeder beliebigen Position, von Gegenständen mit relativ großen Abmessungen und insgesamt flacher Form, **dadurch gekennzeichnet, daß** sie eine Rampe (1) aufweist, zwischen deren beiden Flanschen (10) drehbar, jeweils um eine Achse (3), Nasen (2) montiert sind, wobei jede Nase in Querrichtung eine ausgefräste zylindrische Aushöhlung (22) aufweist, die axial durch besagte Achse (3) durchquert wird und deren Boden (23) mit einem Loch (24) durchbrochen ist, das als Durchlaß für eines der Enden (30) besagter Achse (3) dient, wobei dieses Ende einen der besagten Flansche (10) durchquert und wobei besagte Aushöhlung (22) eine Torsionsfeder (4) aufnimmt, welche auf besagte Achse (3) aufgesteckt ist und mit der Nase (2) mit einem ihrer Enden (40) fest verbunden ist, wobei das andere Ende (41) fest mit einer Hülse (5) verbunden ist, die wiederum geeignet ist, teilweise in besagte Aushöhlung (22) eingeschoben zu werden und in die axial ein Sackloch (50) gebohrt ist, in das wiederum das andere Ende (31) besagter Achse (3) eingesteckt wird, wobei besagte Hülse (5) in ein Langloch (11) am anderen Flansch (10) eingesteckt wird und mit Aussparungen (12, 13) versehen ist; in eine dieser Aussparungen wird ein Vorsprung (52) eingeführt, der an seinem Umfang besagte Hülse (5) trägt, und so zur Dreh-Arretierung letzterer in besagtem Langloch (11) dient, wobei besagter Vorsprung (52) sich auf der Seite (54) derjenigen Nase (2) befindet, die eine größere Breite als diejenige der besagten Aussparungen (12, 13) aufweist, um besagte Hülse (5) in der Translation innerhalb besagter Rampe zu verriegeln.

2. Vorrichtung gemäß Anspruch Nr. 1, **dadurch gekennzeichnet, daß** das in den Flansch gebohrte Langloch eine breitere Aussparung (14) aufweist, die den vollständigen Durchlaß des Vorsprungs (52) und folglich die Entnahme der Hülse ermöglicht.

3. Vorrichtung gemäß Anspruch Nr. 1 oder Nr. 2, **dadurch gekennzeichnet, daß** die Hülse (5) an dem dem mit einem Sackloch versehenen Ende gegenüberliegenden Ende eine hohle Aufnahme aufweist, mit dem sie mit Hilfe eines Werkzeugs in Drehrichtung betätigt werden kann.

4. Vorrichtung gemäß einem beliebigen der vorigen Ansprüche, **dadurch gekennzeichnet, daß** die Feder (4) fest mit der Nase (2) über ihr Ende (40) verbunden ist, welches in U-Form gebogen und in einen Schlitz (25) eingeführt und dort gesichert wird, welcher am Boden (23), koaxial zum Durchlaßloch (24) der Achse (3) angebracht ist, während sie (die Feder) fest mit der Hülse (5) über ihr anderes Ende (41) verbunden ist, welches in eine parallel zum Sackloch (53) angebrachte Bohrung (54) eingeführt wird.

## Claims

1. Device with movable stops with assisted return mechanism for the piling, in all positions, of relatively large, more or less flat objects, **characterised in that** it includes a ramp (1) between the two flanges (10) of which are mounted the stops (2), each pivoting about an axis (3), each including transversally a deep cylindrical cavity (22), through which the said axis (3) passes through axially and the base of which (23) contains a hole (24) allowing the passage of the said axis (3) through one of its ends (30) which passes through one of the said flanges (10), the said cavity (22) housing a torsion spring (4) passed over the said axis (3) and attached to the stop (2) by one of its ends (40), the other end (41) being integral with a bushing (5) able to be introduced partially into the said cavity (22) and in which is made axially a blind hole (50) into which is introduced the other end (31) of the said axis, the said bushing being fitted into an opening (11) made in the other flange (10) and which includes recesses (12, 13) into one of which is introduced a pin (52) which is part of the outside of the said bushing (5), and thus allowing the blocking of the rotation of the latter in the said opening (11), the said pin (52) being on the side (54) of the stop (2) of a width bigger than that of the said recesses (12, 13) in order to block the said bushing (5) in translation, inside the said ramp.

2. Device according to claim 1 **characterised in that** the opening made in the flange includes a wider recess (14) allowing the pin (52) to be passed through completely and therefore the removal of the bushing (5).

3. Device according to claim 1 or claim 2 **characterised in that** the bushing (5) includes at the end opposite to that with a blind hole, a hollow indentation allowing it to be rotated using a tool.

4. Device according to any one of the above claims **characterised in that** the spring (4) is attached to the stop (2) by means of its end (40) which is folded in a U-shape and introduced into and blocked in a slot (25) made in the base (23) coaxially to the hole (24) through which the axis passes (3), whereas it is attached to the bushing (5) by its other end (41) which is introduced into a hole (54) drilled parallel to the blind hole (53).
